# EUROPÄISCHE PATENTSCHRIFT

(11) **EP 2 005 023 B1**
(45) Veröffentlichungstag und Bekanntmachung des Hinweises auf die Patenterteilung: **26.05.2010**
(21) Anmeldenummer: 07727037.9
(22) Anmeldetag: 19.03.2007
(51) Int. Cl.: F16D 65/14

(54) **SELBSTVERSTÄRKENDE ELEKTROMECHANISCHE TEILBELAGSCHEIBENBREMSE**
SELF-ENERGIZING ELECTROMECHANICAL PARTIALLY LINED DISC BRAKE
FREIN A DISQUE A GARNITURE PARTIELLE ELECTROMECANIQUE A AUTO-AMPLIFICATION

(30) Priorität: 04.04.2006 DE 102006015741
(43) Veröffentlichungstag der Anmeldung: 24.12.2008
(73) Patentinhaber: Robert Bosch GmbH, 70442 Stuttgart (DE)
(72) Erfinder: CAO, Chi-Thuan, 70825 Korntal-Muenchingen (DE); BAUMANN, Dietmar, 71282 Hemmingen (DE); HOFMANN, Dirk, 70439 Stuttgart (DE); VOLLERT, Herbert, 71665 Vaihingen/Enz (DE); NAGEL, Willi, 71686 Remseck/Hochdorf (DE); HENKE, Andreas, 34474 Diemelstadt (DE); FOITZIK, Bertram, 74360 Ilsfeld (DE); GOETZELMANN, Bernd, 71063 Sindelfingen (DE); FRICK, Hans, 87487 Wiggensbach (DE)
(86) Internationale Anmeldenummer: PCT/EP2007/052559
(87) Internationale Veröffentlichungsnummer: WO 2007/115900

(56) Entgegenhaltungen:
- WO-A-03/056204
- WO-A-2007/017333
- DE-A1- 10 361 264

## Beschreibung

### Stand der Technik

Die Erfindung betrifft eine selbstverstärkende elektromechanische Teilbelagscheibenbremse mit den Merkmalen des Oberbegriffs des Anspruchs 1. Mit Teilbelag ist gemeint, dass sich die Scheibenbremse, insbesondere ihr Reibbremsbelag, nur über einen (Bruch-)Teil eines Umfangs einer Bremsscheibe erstreckt. Üblicherweise befindet sich die Teilbelagscheibenbremse bzw. ihr Bremssattel und der Reibbremsbelag bzw. die Reibbremsbeläge an einer Stelle eines Umfangs der Bremsscheibe und erstrecken sich in Umfangsrichtung nur ein kurzes Stück über deren Umfang.

Die WO-A-2005/061920 (EP-A-1700 052) offenbart eine derartige selbstverstärkende elektromechanische Teilbelagscheibenbremse. Die bekannte Teilbelagscheibenbremse weist einen beweglichen Reibbremsbelag auf, der zur Betätigung der Teilbelagscheibenbremse mit einer elektromechanischen Betätigungseinrichtung gegen eine Bremsscheibe drückbar ist. Die elektromechanische Betätigungseinrichtung weist einen Elektromotor, ein mechanisches Untersetzungsgetriebe und ein Zahnstangengetriebe zur Umsetzung der Rotationsbewegung des Elektromotors und des Untersetzungsgetriebes in eine Translationsbewegung zum Verschieben des Reibbremsbelags auf. Es sind auch andere Ausführungsformen der elektromechanischen Betätigungseinrichtung denkbar und möglich, beispielsweise kann die Rotationsbewegung mit einem Gewindetrieb oder einem Nocken in eine Translationsbewegung umgesetzt werden.

Die bekannte Teilbelagscheibenbremse weist eine Selbstverstärkungseinrichtung mit einem Rampenmechanismus auf. Der Rampenmechanismus weist drei Rampen auf, die den Reibbremsbelag an drei Stellen, die nicht auf einer Geraden liegen, abstützen. Die Abstützung kann als Dreipunktabstützung an den Ecken eines gedachten Dreiecks aufgefasst werden. Die Abstützung ist statisch bestimmt. Die Rampen verlaufen in einer Umfangsrichtung und in einem Rampenwinkel zur Bremsscheibe. Anstatt in Umfangsrichtung können die Rampen auch in beispielsweise einer Sehnenrichtung zur Bremsscheibe verlaufen. Wesentlich ist ein Verlauf der Rampen bzw. eine Verschiebung des Reibbremsbelags so, dass eine beim Bremsen von der drehenden Bremsscheibe auf den gegen sie gedrückten Reibbremsbelag ausgeübte Reibungskraft den Reibbremsbelag in Richtung eines enger werdenden Keilspalts zwischen den Rampen und der Bremsscheibe beaufschlagt, um die im Folgenden erläuterte Selbstverstärkung zu bewirken. Der Reibbremsbelag wird vom Rampenmechanismus in Umfangsrichtung zur Bremsscheibe und im Rampenwinkel zur Bremsscheibe verschieblich geführt. Die Verschiebung des Reibbremsbelags zur Betätigung der Teilbelagscheibenbremse erfolgt mittels der elektromechanischen Betätigungseinrichtung. Der Rampenwinkel kann sich im Verlauf der Rampen ändern. Beispielsweise wird durch einen großen Rampenwinkel zu Beginn der Verschiebung des Reibbremsbelags eine schnelle Überwindung eines Lüftspiels, d. h. eines Spalts zwischen dem Reibbremsbelag und der Bremsscheibe, zu Beginn der Betätigung der Teilbelagscheibenbremse erreicht, um den Reibbremsbelag schnell in Anlage an die Bremsscheibe zu bringen. Durch einen mit der Verschiebung des Reibbremsbelags zunehmend kleineren Rampenwinkel wird eine größere Selbstverstärkung mit zunehmender Bremskraft erreicht. Ist der Rampenwinkel über den Verlauf der Rampen konstant, spricht man auch von einem Keilmechanismus. Die Verschiebung des Reibbremsbelags ist eine schraubenlinienförmige Bewegung in Umfangsrichtung der Bremsscheibe mit einer sich ändernden oder einer konstanten Steigung auf die Bremsscheibe zu.

Bei betätigter Teilbelagscheibenbremse übt die drehende Bremsscheibe eine Reibungskraft auf den gegen sie gedrückten Reibbremsbelag aus. Die Reibungskraft beaufschlagt den Reibbremsbelag in Richtung eines enger werdenden Keilspalts zwischen den Rampen und der Bremsscheibe. Die Abstützung des Reibbremsbelags an den Rampen bewirkt aufgrund des Rampenwinkels nach dem sog. Keilprinzip eine Abstützkraft, die eine Kraftkomponente senkrecht zur Bremsscheibe aufweist. Diese Kraftkomponente bildet eine Andruckkraft, die den Reibbremsbelag gegen die Bremsscheibe drückt. Diese Andruckkraft resultiert aus der Reibungskraft, sie wird nicht von der Betätigungseinrichtung aufgebracht, sondern drückt den Reibbremsbelag zusätzlich zu einer von der Betätigungseinrichtung aufgebrachten Andruckkraft gegen die Bremsscheibe. Die Bremskraft ist dadurch verstärkt, die Teilbelagscheibenbremse weist eine Selbstverstärkung auf, der Rampenmechanismus bildet eine Selbstverstärkungseinrichtung, die die von der Bremsscheibe auf den gegen sie gedrückten Reibbremsbelag ausgeübte Reibungskraft in eine Andruckkraft wandelt.

Der Rampenmechanismus der bekannten Teilbelagscheibenbremse weist Wälzkörper auf, die auf den Rampen wälzen und über die sich der Reibbremsbelag abstützt. Die Wälzkörper der bekannten Teilbelagscheibenbremse sind Rollen, es kommen beispielsweise Zylinder- oder Kegelrollen in Betracht. Auch ist es möglich, Kugeln als Wälzkörper zu verwenden. Die Rampen können erhaben und/oder vertieft beispielsweise in Form von Nuten oder Rinnen mit sich über ihren Verlauf in einer Richtung ändernder Tiefe ausgebildet sein. Die Wälzkörper sind auf den Ecken eines gedachten Dreiecks angeordnet.

### Erläuterung und Vorteile der Erfindung

Bei der erfindungsgemäßen selbstverstärkenden elektromechanischen Teilbelagscheibenbremse mit den Merkmalen des Anspruchs 1 geht eine gedachte Wirkungslinie einer von der Betätigungseinrichtung in einem Winkel zur Bremsscheibe auf den Reibbremsbelag ausgeübten Betätigungskraft zwischen den Wälzkörpern hindurch. Die Wirkungslinie der Betätigungskraft schneidet also das gedachte, von den Wälzkörpern des Rampenmechanismus aufgespannte Dreieck. Vorzugsweise liegt der Schnittpunkt der Wirkungslinie und des gedachten Dreiecks im geometrischen Flächenschwerpunkt des Dreiecks. Die Belastung durch die von der Betätigungseinrichtung auf den Reibbremsbelag ausgeübte Betätigungskraft ist dadurch gleichmäßiger auf die Wälzkörper aufgeteilt. Die Andruckkraft des Reibbremsbelags gegen die Bremsscheibe ist gleichmäßiger über die Fläche des Reibbremsbelags verteilt, der Reibbremsbelag verschleißt dadurch gleichmäßiger über seine Fläche. Weiterer Vorteil der Erfindung ist, dass ein durch die Betätigungskraft bewirktes, am Reibbremsbelag wirksames Drehmoment verringert ist. Ein solches Drehmoment übt die Betätigungskraft aus, wenn ihre Wirkungslinie radial innerhalb oder radial außerhalb des geometrischen Flächenschwerpunkts des Reibbremsbelags am Reibbremsbelag angreift. Durch die Erfindung wird der radiale Abstand, mit dem die Betätigungskraft vom Flächenschwerpunkt des Reibbremsbelags angreift, verringert. Idealerweise wird der Abstand zu Null. In gleichem Maße wird das Drehmoment verringert, im Idealfall zu Null. Das Drehmoment wirkt um eine gedachte Achse senkrecht zur Bremsscheibe durch den geometrischen Flächenschwerpunkt des Reibbremsbelags.

Die Unteransprüche haben vorteilhafte Ausgestaltungen und Weiterbildungen der im Anspruch 1 angegebenen Erfindung zum Gegenstand.

### Zeichnung

Die Erfindung wird nachfolgend anhand eines in der Zeichnung dargestellten Ausführungsbeispiels näher erläutert. Es zeigen:
- Figur 1: eine schematisierte, perspektivische Darstellung einer erfindungsgemäßen selbstverstärkenden elektromechanischen Teilbelagscheibenbremse;
- Figur 2: eine Ansicht einer Rückseite eines Reibbremsbelags der Teilbelagscheibenbremse gemäß Pfeil II in Figur 1; und
- Figur 3: eine Schnittdarstellung gemäß der zweifach abgewinkelten Linie III-III in Figur 2.

Die Zeichnungen sind als schematisierte und vereinfachte Darstellungen zu verstehen.

### Beschreibung des Ausführungsbeispiels

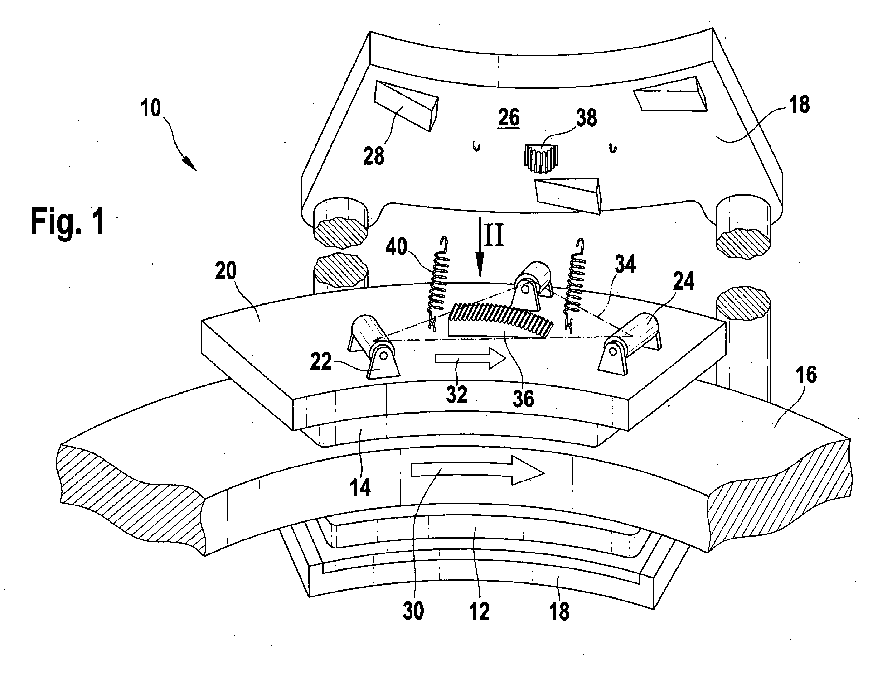

Figur 1 zeigt schematisch eine erfindungsgemäße, selbstverstärkende elektromechanische Teilbelagscheibenbremse 10. Die Teilbelagscheibenbremse 10 weist zwei Reibbremsbeläge 12, 14 auf, die beiderseits einer Bremsscheibe 16 angeordnet sind. Einer der beiden Reibbremsbeläge 12 liegt fest, d. h. unbeweglich in einem Bremssattel 18 ein. Dieser Reibbremsbelag 12 wird nachfolgend als fester Reibbremsbelag 12 bezeichnet werden. Vom Bremssattel 18 ist ein in der Zeichnung oberhalb der Bremsscheibe 16 befindlicher Teil abgebrochen und um 90° nach oben/außen geklappt dargestellt, weil er sonst wesentliche Teile der Teilbelagscheibenbremse 10 verdecken würde. Der Bremssattel 18 übergreift wie üblich die Bremsscheibe 16 außerhalb ihres Umfangs.

Der andere Reibbremsbelag 14 ist in einer Drehrichtung und quer zur Bremsscheibe 16 beweglich. In Drehrichtung der Bremsscheibe 16 bedeutet, dass der bewegliche Reibbremsbelag 14 um eine gedachte Achse drehbar ist, die zumindest näherungsweise mit einer Drehachse der Bremsscheibe 16 zusammen fällt. Grundsätzlich ist auch eine Verschiebbarkeit des beweglichen Reibbremsbelags 14 in einer Sekantenrichtung zur Bremsscheibe 16 möglich. Die Bewegung des Reibbremsbelags 14 zur Betätigung der Teilbelagscheibenbremse 10 erfolgt mit einer elektromechanischen Betätigungseinrichtung, die der klaren Darstellung wegen nicht gezeichnet ist. Derartige Betätigungseinrichtungen sind dem Fachmann in unterschiedlichen Konstruktionen aus dem Stand der Technik bekannt und sollen, da sie nicht den eigentlichen Gegenstand der Erfindung bilden, hier nicht näher erläutert werden.

Der Reibbremsbelag 14 ist wie üblich fest und unlösbar mit einer Bremsbelagträgerplatte 20 verbunden. Auf einer der Bremsscheibe 16 abgewandten Rückseite weist die Bremsbelagträgerplatte 20 Lagerböcke 22 auf, in denen Wälzkörper 24 drehbar gelagert sind. Im dargestellten und beschriebenen Ausführungsbeispiel der Erfindung werden Rollen als Wälzkörper 24 verwendet. Drehachsen der Wälzkörper 24 verlaufen radial zu einer Drehachse der Bremsscheibe 16. Es ist allerdings nicht zwingend, dass die Drehachsen der Wälzkörper 24 radial zur Drehachse der Bremsscheibe 16 angeordnet sind. Soll der Reibbremsbelag 14 beispielsweise in einer Sehnenrichtung zur Bremsscheibe 16 verschoben werden, verlaufen die Drehachsen der Wälzkörper 24 parallel zueinander und rechtwinklig zu der Sehne. Mit den Lagerböcken 22 sind die Wälzkörper 24 ortsfest und drehbar am beweglichen Reibbremsbelag 14 gelagert, beim Verschieben des Reibbremsbelags 14 bewegen sich die Wälzkörper 24 mit dem Reibbremsbelag 14 mit.

Auf einer der Bremsscheibe 16 zugewandten Vorderseite einer Widerlagerplatte 26 sind Rampen 28 angeordnet, an denen sich die Wälzkörper 24 abstützen und auf denen die Wälzkörper 24 wälzen. Die Rampen 28 verlaufen in einer Umfangs- und Drehrichtung der Bremsscheibe 16 und damit in der Verschieberichtung des Reibbremsbelags 14. Die Rampen 28 steigen in Drehrichtung der Bremsscheibe 16 an. Im dargestellten Ausführungsbeispiel ist die Widerlagerplatte 26 der abgebrochen und nach oben/außen geklappt gezeichnete Teil des Bremssattels 18.

Die Widerlagerplatte 26 ist in etwa deckungsgleich mit der Bremsbelagträgerplatte 20 auf deren der Bremsscheibe 16 abgewandter Rückseite angeordnet. In Figur 1 ist die Widerlagerplatte 26 wie bereits gesagt nach oben/außen geklappt dargestellt um die Rampen 28 und die Wälzkörper 24 sichtbar zu machen. Tatsächlich ist die Widerlagerplatte 26 parallel zu den Reibbremsbelägen 12, 14, der Bremsscheibe 16 und der Bremsbelagträgerplatte 20 angeordnet. Der Bremssattel 18 ist als sog. Schwimmsattel ausgeführt, d. h. er ist quer zur Bremsscheibe 16 verschieblich. Beim Drücken des beweglichen Reibbremsbelags 14 an die Bremsscheibe 16 wird der Bremssattel 18 quer zur Bremsscheibe 16 verschoben und drückt den festen Reibbremsbelag 12 an die andere Seite der Bremsscheibe 16, so dass die Bremsscheibe 16 von beiden Reibbremsbelägen 12, 14 gebremst wird.

Zum Betätigen der Teilbelagscheibenbremse 10 wird der bewegliche Reibbremsbelag 14 in Drehrichtung der Bremsscheibe 16 verschoben. Die Drehrichtung der Bremsscheibe 16 ist in Figur 1 mit dem Pfeil 30 und die Verschieberichtung des Reibbremsbelags 14 mit dem Pfeil 32 auf der Bremsbelagträgerplatte 20 dargestellt. Bei der Bewegung des Reibbremsbelags 14 in Drehrichtung 30 der Bremsscheibe 16 wälzen die Wälzkörper 24 auf den Rampen 28. Aufgrund des Anstiegs der Rampen 28 wird der Reibbremsbelag 14 bei der Bewegung in Drehrichtung 30 der Bremsscheibe 16 quer auf die Bremsscheibe 16 zu bewegt und gegen diese gedrückt. Die Bremsscheibe 16 wird gebremst. Die drehende Bremsscheibe 16 übt eine Reibungskraft in Drehrichtung 30 auf den gegen sie gedrückten Reibbremsbelag 14 aus, die den Reibbremsbelag 14 in Drehrichtung 30 der Bremsscheibe 16 und damit in seiner Bewegungsrichtung 32 beaufschlagt. Über die Abstützung an den Rampen 28 bewirkt die Beaufschlagung des Reibbremsbelags 14 mit der Reibungskraft in Drehrichtung 30 der Bremsscheibe 16 eine zu den Rampen 28 senkrechte Stützkraft, die eine Komponente quer zur Bremsscheibe 16 aufweist. Diese Kraftkomponente quer zur Bremsscheibe 16 bildet eine Andruckkraft, die den Reibbremsbelag 14 zusätzlich zu einer von der Betätigungseinrichtung aufgebrachten Andruckkraft gegen die Bremsscheibe 16 drückt. Die Bremskraft der Teilbelagscheibenbremse 10 wird dadurch verstärkt.

Die Rampen 28 verlaufen in einem üblicherweise spitzen Rampenwinkel zur Bremsscheibe 16. Der Rampenwinkel kann sich über den Verlauf der Rampen 28, d. h. in deren Längsrichtung ändern. Bei einem über die Länge der Rampen 28 konstanten Rampenwinkel spricht man auch von Keilen. Die Rampen 28 bilden einen Rampenmechanismus, der die Selbstverstärkung der Teilbelagscheibenbremse 10 bewirkt.

Im dargestellten Ausführungsbeispiel sind drei Wälzkörper 24 auf der Bremsbelagträgerplatte 20 und drei Rampen 28 auf der Widerlagerplatte 26 angeordnet. Dies ergibt eine statisch bestimmte Abstützung des Reibbremsbelags 14. Eine statisch überbestimmte Abstützung mit mehr als drei Wälzkörpern 24 und Rampen 28 ist denkbar. Auch weniger als drei Wälzkörper 24 und Rampen 28 sind möglich, wenn sich beispielsweise zwei Wälzkörper 24 und zwei Rampen 28 über eine Breite der Bremsbelagträgerplatte 20 erstrecken (nicht dargestellt.)

In dem in Figur 1 dargestellten Ausführungsbeispiel steigen die Rampen 28 nur in einer Drehrichtung 30 der Bremsscheibe 16 an, die Teilbelagscheibenbremse 10 weist eine Selbstverstärkung also nur für die mit Pfeil 30 angegebene Drehrichtung der Bremsscheibe 16 auf. Bei entgegengesetzter Drehrichtung der Bremsscheibe 16 findet keine Selbstverstärkung statt. Um auch für die entgegengesetzte Drehrichtung der Bremsscheibe 16 eine Selbstverstärkung zu erzielen, können in entgegengesetzter Richtung ansteigende Rampen vorgesehen werden (nicht dargestellt). Durch unterschiedliche Rampenwinkel können verschieden große Selbstverstärkungen in den beiden Drehrichtungen der Bremsscheibe 16, also für Vor- und Rückwärtsfahrt, erreicht werden.

Die drei Wälzkörper 24 spannen ein gedachtes, mit Strichpunktlinien angedeutetes Dreieck 34 auf, dessen Ecken in den Längsmitten der Wälzkörper 24 liegen. Zur Betätigung der Teilbelagscheibenbremse 10 weist die Bremsbelagträgerplatte 20 auf ihrer Rückseite eine Zahnstange 36 auf. Die Zahnstange 36 verläuft wie die Rampen 28 in Umfangsrichtung zur Bremsscheibe 16 mit einem dem Rampenwinkel entsprechenden Winkel zur Bremsscheibe 16. Die Steigung der Zahnstange 36 ist gleich wie die Steigungen der Rampen 28. Die Zahnstange 36 ist innerhalb des gedachten Dreiecks 34 angeordnet, das von den Wälzkörpern 24 aufgespannt wird. Die Zahnstange 36 geht durch den gedachten geometrischen Flächenschwerpunkt des Dreiecks 34. Der Antrieb erfolgt mittels eines Zahnrads 38, das in Figur 1 in der Widerlagerplatte 26 zu sehen ist und das mit der Zahnstange 36 kämmt. Das Zahnrad 38 wird von einem nicht dargestellten Elektromotor über ein ebenfalls nicht dargestelltes mechanisches Untersetzungsgetriebe angetrieben. Die Zahnstange 36, das mit ihr kämmende Zahnrad 38, der Elektromotor und das Untersetzungsgetriebe bilden eine elektromechanische Betätigungseinrichtung der Teilbelagscheibenbremse 10.

Das Zahnrad 38 greift in der Verzahnung der Zahnstange 36 an. Eine Wirkungslinie einer Betätigungskraft, die von der Betätigungseinrichtung ausgeübt wird, verläuft somit in Längsrichtung der Zahnstange 36 durch deren Verzahnung. Durch die Anordnung der Zahnstange 36 im Flächenschwerpunkt des von den Wälzkörpern 24 aufgespannten gedachten Dreiecks 34 geht die Wirkungslinie der Betätigungskraft durch das Dreieck 34 hindurch, vorzugsweise durch dessen Flächenschwerpunkt. Dadurch wird die Betätigungskraft gleichmäßig auf die Wälzkörper 24 verteilt. Ebenfalls wird die Andruckkraft des Reibbremsbelags 14 gegen die Bremsscheibe 16 gleichmäßig auf die Fläche des Reibbremsbelags 14 verteilt und eine ungleichmäßige Belagsabnutzung vermieden.

Die Zahnstange 36 ist auf einer gedachten Kreisbogenlinie um die Drehachse der Bremsscheibe 16 angeordnet, sie befindet sich auf einer gedachten Normalen zur Bremsscheibe 16 durch den geometrischen Flächenschwerpunkt des Reibbremsbelags 14. Mit anderen Worten gesagt ist die Zahnstange 36 auf dem effektiven Reibradius des Reibbremsbelags 14 angeordnet. Dadurch wird ein Moment um eine gedachte Achse senkrecht zur Bremsscheibe 16 auf den Reibbremsbelag 14 durch die Betätigungskraft vermieden.

Die Wirkungslinie der Betätigungskraft verläuft in der durch die Rampen 28 vorgegebene Verschieberichtung des Reibbremsbelags 14. Dadurch wird eine maximale Ausnutzung der von der Betätigungseinrichtung aufgebrachten Betätigungskraft erreicht, d. h. die durch die Betätigungskraft bewirkte Andruckkraft des Reibbremsbelags 14 gegen die Bremsscheibe 16 ist bei gegebener Betätigungskraft maximal.

Die Teilbelagscheibenbremse 10 weist zwei Haltefedern 40 auf. Diese sind im dargestellten und beschriebenen Ausführungsbeispiel als Schraubenzugfedern ausgebildet und an der Rückseite der Bremsbelagträgerplatte 20 und der Vorderseite der Widerlagerplatte 26 eingehängt. Die Anordnung der Haltefedern 40 bewirkt, dass die Wälzkörper 24 bei gelöster Teilbelagscheibenbremse 10 gegen die Rampen 28 gedrückt bleiben, so dass der Reibbremsbelag 14 in Umfangsrichtung der Bremsscheibe 16 verschieblich geführt bleibt. Die Haltefedern 40 sind in dem gedachten, von den Wälzkörpern 24 aufgespannten Dreieck 34 angeordnet. Ihre gedachte gemeinsame Wirkungslinie geht vorzugsweise durch den Flächenschwerpunkt des Dreiecks 34 und durch den effektiven Reibradius des Reibbremsbelags 14 hindurch. Der effektive Reibradius ist der Abstand des Flächenschwerpunkt des Reibbremsbelags 14 von der Drehachse der Bremsscheibe 16. Mit gemeinsamer Wirkungslinie der Haltefedern 40 ist die Wirkungslinie einer gedachten Haltefeder gemeint, die die beiden Haltefedern 40 ersetzt und dieselbe Wirkung wie sie auf die Bremsbelagträgerplatte 20 ausübt. Die Teilbelagscheibenbremse 10 kann jedenfalls theoretisch auch nur eine Haltefeder oder mehr als zwei Haltefedern aufweisen (nicht dargestellt).

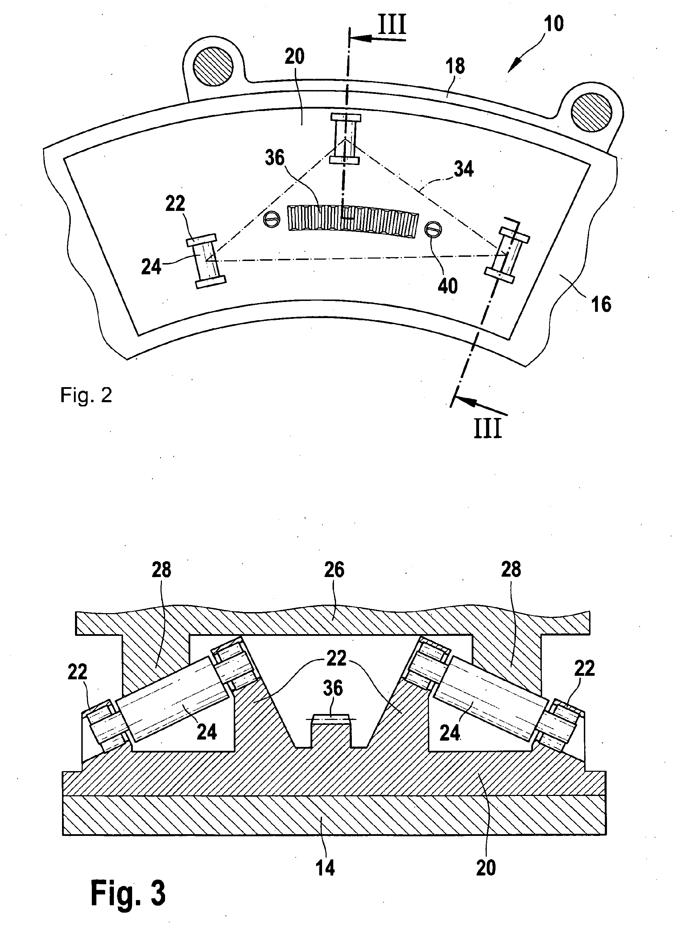

Wie in Figur 3 zu sehen, weisen die Rampen 28 und die Wälzkörper 24 eine Querneigung auf. Dabei sind die beiden radial weiter innen angeordneten Rampen 28 entgegengesetzt geneigt wie die radial weiter außen angeordnete Rampe 28. Durch die entgegengerichtete Querneigung führen die Rampen 28 den Reibbremsbelag 14 quer zur Verschieberichtung, d. h. radial zur Bremsscheibe 16. Idealerweise schneiden gedachte Normale durch die Längsmitten der Rampen 28 eine gedachte Kreisbogenlinie, deren Radius zur Drehachse der Bremsscheibe 16 dem effektiven Reibradius des Reibbremsbelags 14 entspricht, in Höhe der dem Reibbremsbelag 14 zugeordneten Oberfläche der Bremsscheibe 16.

## Patentansprüche

1. Selbstverstärkende elektromechanische Teilbelagscheibenbremse mit einem Reibbremsbelag (14), mit einer elektromechanischen Betätigungseinrichtung (34, 38), mit der zur Betätigung der Teilbelagscheibenbremse (10) der Reibbremsbelag (14) gegen eine Bremsscheibe (16) drückbar ist, mit einer Selbstverstärkungseinrichtung, die einen Rampenmechanismus (24, 28) aufweist, der den Reibbremsbelag (14) in einer Umfangsrichtung und in einem Rampenwinkel zur Bremsscheibe (16) verschieblich abstützt und eine von der drehenden Bremsscheibe (16) auf den beim Bremsen gegen sie gedrückten Reibbremsbelag (14) ausgeübte Reibungskraft in eine Andruckkraft wandelt, die den Reibbremsbelag (14) zusätzlich zu einer von der Betätigungseinrichtung (36, 38) aufgebrachten Andruckkraft gegen die Bremsscheibe (16) drückt, wobei der Rampenmechanismus drei Rampen (28) aufweist, auf denen Wälzkörper (24) wälzen, die auf Ecken eines gedachten Dreiecks (34) angeordnet sind und den Reibbremsbelag (14) abstützen, **dadurch gekennzeichnet, dass** eine gedachte Wirkungslinie einer von der Betätigungseinrichtung (36, 38) in einem Winkel zur Bremsscheibe (16) auf den Reibbremsbelag (14) ausgeübten Betätigungskraft zwischen den Wälzkörpern (24) hindurchgeht.

2. Teilbelagscheibenbremse nach Anspruch 1, **dadurch gekennzeichnet, dass** die Wirkungslinie der von der Betätigungseinrichtung (36, 38) auf den Reibbremsbelag (14) ausgeübten Betätigungskraft durch einen Schwerpunkt einer gedachten, von den Wälzkörpern (24) aufgespannten Fläche (34) hindurch geht.

3. Teilbelagscheibenbremse nach Anspruch 1, **dadurch gekennzeichnet, dass** ein Schnittpunkt der Wirkungslinie der von der Betätigungseinrichtung (36, 38) auf den Reibbremsbelag (14) ausgeübten Betätigungskraft mit der gedachten, von den Wälzkörpern (24) aufgespannten Fläche (34) den gleichen Abstand von einer Drehachse der Bremsscheibe (16) aufweist wie ein effektiver Reibradius des Reibbremsbelags (14).

4. Teilbelagscheibenbremse nach Anspruch 1, **dadurch gekennzeichnet, dass** die Wirkungslinie der von der Betätigungseinrichtung (36, 38) auf den Reibbremsbelag (14) ausgeübten Betätigungskraft in Verschieberichtung des Reibbremsbelags (14) verläuft.

5. Teilbelagscheibenbremse nach Anspruch 1, **dadurch gekennzeichnet, dass** die Teilbelagscheibenbremse (10) eine Haltefeder (40) aufweist, die den Reibbremsbelag (14) gegen den Rampenmechanismus (24, 28) beaufschlagt, und dass eine Wirkungslinie der Haltefeder (40) zwischen den Wälzkörpern (24) hindurchgeht.

6. Teilbelagscheibenbremse nach Anspruch 5, **dadurch gekennzeichnet, dass** die Wirkungslinie der Haltefeder (40) den gleichen Abstand von einer Drehachse der Bremsscheibe (16) aufweist wie der effektive Reibradius des Reibbremsbelags (14).

7. Teilbelagscheibenbremse nach Anspruch 1, **dadurch gekennzeichnet, dass** die Betätigungseinrichtung eine Zahnstange (36) und ein Zahnrad (38), das mit der Zahnstange (36) kämmt, aufweist und dass die Zahnstange (36) in einer Verschieberichtung des Reibbremsbelags (14) verläuft.

8. Teilbelagscheibenbremse nach Anspruch 1, **dadurch gekennzeichnet, dass** der Rampenmechanismus (24, 28) ortsfeste und drehbar gelagerte Wälzkörper (24) aufweist, die auf den Rampen (28) wälzen.

9. Teilbelagscheibenbremse nach Anspruch 1, **dadurch gekennzeichnet, dass** die Rampen (28) eine Querneigung (β) aufweisen, wobei die Querneigung (β) einer Rampe (28), die einen kleineren Abstand von der Drehachse der Bremsscheibe (16) aufweist, der Querneigung, (β) einer Rampe (28), die einen größeren Abstand von der Drehachse der Bremsscheibe (16) aufweist, entgegengerichtet geneigt ist.

## Claims

1. Self-energizing electromechanical part-lined disc brake, with a friction brake lining (14), with a electromechanical actuating device (34, 38), by means of which the friction brake lining (14) can be pressed against a brake disc (16) in order to actuate the part-lined disc brake (10), and with a self-energizing device having a ramp mechanism (24, 28) which supports the friction brake lining (14) displaceably in a circumferential direction and at a ramp angle with respect to the brake disc (16) and which converts a frictional force exerted by the rotating brake disc (16) upon the friction brake lining (14) pressed against the latter during braking into a pressure force which presses the friction brake lining (14) against the brake disc (16) in addition to a pressure force applied by the actuating device (36, 38), the ramp mechanism having three ramps (28), on which roll rolling bodies (24) which are arranged at corners of an imaginary triangle (34) and which support the friction brake lining (14), **characterized in that** an imaginary line of action of an actuating force exerted by the actuating device (36, 38) upon the friction brake lining (14) at an angle with respect to the brake disc (16) passes through between the rolling bodies (24).

2. Part-lined disc brake according to Claim 1, **characterized in that** the line of action of the actuating force exerted by the actuating device (36, 38) upon the friction brake lining (14) passes through a centre of gravity of an imaginary surface (34) spanned by the rolling bodies (24).

3. Part-lined disc brake according to Claim 1, **characterized in that** a point of intersection of the line of action of the actuating force exerted by the actuating device (36, 38) upon the friction brake lining (14) with the imaginary surface (34) spanned by the rolling bodies (24) is at the same distance from an axis of rotation of the brake disc (16) as an effective frictional radius of the friction brake lining (14).

4. Part-lined disc brake according to Claim 1, **characterized in that** the line of action of the actuating force exerted by the actuating device (36, 38) upon the friction brake lining (14) runs in the direction of displacement of the friction brake lining (14).

5. Part-lined disc brake according to Claim 1, **characterized in that** the part-lined disc brake (10) has a holding spring (40) which acts upon the friction brake lining (14) counter to the ramp mechanism (24, 28), and yet a line of action of the holding spring (40) passes through between the rolling bodies (24).

6. Part-lined disc brake according to Claim 5, **characterized in that** the line of action of the holding spring (40) is at the same distance from an axis of rotation of the brake disc (16) as the effective frictional radius of the friction brake lining (14).

7. Part-lined disc brake according to Claim 1, **characterized in that** the actuating device has a rack (36) and a gearwheel (38) which meshes with the rack (36), and **in that** the rack (36) runs in a direction of displacement of the friction brake lining (14).

8. Part-lined disc brake according to Claim 1, **characterized in that** the ramp mechanism (24, 28) has stationary and rotatably mounted rolling bodies (24) which roll on the ramps (28).

9. Part-lined disc brake according to Claim 1, **characterized in that** the ramps (28) have a transverse inclination (β), the transverse inclination (β) of a ramp (28) which is at a shorter distance from the axis of rotation of the brake disc (16) being inclined in the opposite direction to the transverse inclination (β) of a ramp (28) which is at a greater distance from the axis of rotation of the brake disc (16).

## Revendications

1. Frein à disque à garniture partielle électromécanique à auto-amplification comprenant une garniture de frein à friction (14), un dispositif d'actionnement électromécanique (34, 38), avec lequel, pour l'actionnement du frein à disque à garniture partielle (10), la garniture de frein à friction (14) peut être pressée contre un disque de frein (16), un dispositif d'auto-amplification, qui présente un mécanisme de rampe (24, 28), qui supporte de manière déplaçable la garniture de frein à friction (14) dans une direction périphérique et dans un angle de rampe par rapport au disque de frein (16), et qui convertit une force de friction exercée par le disque de frein rotatif (16) sur la garniture de frein à friction (14) pressée contre elle lors du freinage, en une force de pression, qui presse la garniture de frein à friction (14) en plus d'une force de pression appliquée par le dispositif d'actionnement (36, 38) contre le disque de frein (16), le mécanisme de rampe présentant trois rampes (28), sur lesquelles roulent des corps de roulement (24) qui sont disposés sur des coins d'un triangle imaginaire (34) et supportent la garniture de frein à friction (14), **caractérisé en ce qu'**une ligne d'action imaginaire d'une force d'actionnement exercée par le dispositif d'actionnement (36, 38) suivant un angle par rapport au disque de frein (16) sur la garniture de frein à friction (14) passe entre les corps de roulement (24).

2. Frein à disque à garniture partielle selon la revendication 1, **caractérisé en ce que** la ligne d'action de la force d'actionnement exercée par le dispositif d'actionnement (36, 38) sur la garniture de frein à friction (14) passe par un centre de gravité d'une surface imaginaire (34) tendue par les corps de roulement (24).

3. Frein à disque à garniture partielle selon la revendication 1, **caractérisé en ce qu'**un point d'intersection de la ligne d'action de la force d'actionnement exercé par le dispositif d'actionnement (36, 38) sur la garniture de frein à friction (14) avec la surface imaginaire (34) tendue par les corps de roulement (24) présente la même distance à un axe de rotation du disque de frein (16) qu'un rayon de friction effectif de la garniture de frein à friction (14).

4. Frein à disque à garniture partielle selon la revendication 1, **caractérisé en ce que** la ligne d'action de la force d'actionnement exercée par le dispositif d'actionnement (36, 38) sur la garniture de frein à friction (14) s'étend dans la direction de déplacement de la garniture de frein à friction (14).

5. Frein à disque à garniture partielle selon la revendication 1, **caractérisé en ce que** le frein à disque à garniture partielle (10) présente un ressort de retenue (40), qui sollicite la garniture de frein à friction (14) contre le mécanisme de rampe (24, 28), et **en ce qu'**une ligne d'action du ressort de retenue (40) passe entre les corps de roulement (24).

6. Frein à disque à garniture partielle selon la revendication 5, **caractérisé en ce que** la ligne d'action du ressort de retenue (40) présente la même distance à un axe de rotation du disque de frein (16) que le rayon de friction effectif de la garniture de frein à friction (14).

7. Frein à disque à garniture partielle selon la revendication 1, **caractérisé en ce que** le dispositif d'actionnement présente une crémaillère (36) et une roue dentée (38) qui s'engrène avec la crémaillère (36) et **en ce que** la crémaillère (36) s'étend dans une direction de déplacement de la garniture de frein à friction (14).

8. Frein à disque à garniture partielle selon la revendication 1, **caractérisé en ce que** le mécanisme de rampe (24, 28) présente des corps de roulement fixes et montés à rotation (24), qui roulent sur les rampes (28).

9. Frein à disque à garniture partielle selon la revendication 1, **caractérisé en ce que** les rampes (28) présentent une inclinaison transversale (β), l'inclinaison transversale (β) d'une rampe (28), qui présente une plus petite distance à l'axe de rotation du disque de frein (16), étant inclinée à l'opposé de l'inclinaison transversale (β) d'une rampe (28) qui présente une plus grande distance à l'axe de rotation du disque de frein (16).
